# EUROPÄISCHE PATENTANMELDUNG

(11) **EP 0 645 918 A2**
(43) Veröffentlichungstag der Anmeldung: **29.03.1995**
(21) Anmeldenummer: 94114157.4
(22) Anmeldetag: 08.09.1994
(51) Int. Cl.: H04L 12/56, H04L 1/22, H04L 29/14

(54) **Verfahren und Schaltungsanordnung zum Übertragen von Nachrichtenzellen über redundante virtuelle Pfadpaare eines ATM-Kommunikationsnetzes**

(30) Priorität: 16.09.1993 DE 4331577
(71) Anmelder: SIEMENS AKTIENGESELLSCHAFT, D-80333 München (DE)
(72) Erfinder: Foglar, Andreas, Dipl.-Phys., D-81245 München (DE)

(57) **Zusammenfassung**

Für die Übertragung von Nachrichtenzellen über aus jeweils einem aktiven Pfad (AP) und einem Ersatzpfad (EP) gebildete virtuelle Pfadpaare sind zwei alternative Lösungen vorgesehen. Eine erste Lösung besteht darin, daß die über den aktiven Pfad und den Ersatzpfad eines Pfadpaares übertragenen Nachrichtenzellen bis zum Ausgang der am Ende des betreffenden Pfadpaares liegenden Koppeleinrichtung (CCb) geführt werden. Von dort aus erfolgt je nach der Anzahl der über den aktiven Pfad und den Ersatzpfad eintreffenden Nachrichtenzellen eine Weiterleitung der Nachrichtenzellen des aktiven Pfades bzw. des Ersatzpfades. Die zweite Lösung besteht darin, daß die Nachrichtenzellen des Ersatzpfades zunächst am Eingang der betreffenden Koppeleinrichtung verworfen werden. Bei einer Unterbrechung des aktiven Pfades, welche der Koppeleinrichtung durch ein Unterbrechungssignal angezeigt wird, werden dagegen die über den Ersatzpfad eintreffenden Nachrichtenzellen durch die Koppeleinrichtung weitergeleitet.

## Beschreibung

Die Erfindung betrifft ein Verfahren zum Übertragen von Nachrichtenzellen über redundante virtuelle Pfadpaare eines ATM-Kommunikationsnetzes gemäß Oberbegriff des Patentanspruches 1 bzw. des Patentanspruches 3 sowie eine Schaltungsanordnung gemäß Oberbegriff des Patentanspruches 5 zur Durchführung des Verfahrens nach Patentanspruch 1.

ATM-Kommunikationsnetze bieten die Möglichkeit, eine Mehrzahl von virtuellen Verbindungen zu Bündein, die auch als virtuelle Pfade bezeichnet werden, zusammenzufassen. Da ein solcher virtuelle Pfad beispielsweise bis zu 65 536 virtuelle Verbindungen enthalten und außerdem eine hohe Summenbitrate von beispielsweise bis zu 2,4 Gbit/s aufweisen kann, muß der betreffende virtuelle Pfad im Fehlerfalle möglichst schnell auf einen Ersatzweg umgeschaltet werden können, um die Informationsverluste für die einzelnen virtuellen Verbindungen gering zu halten.

Es ist nun Aufgabe der vorliegenden Erfindung, einen Weg zu zeigen, wie ein Verfahren und eine Schaltungsanordnung der eingangs genannten Art ausgebildet werden können, um bei Auftreten eines Fehlers auf einem aktiven Pfad möglichst schnell auf einen diesem zugeordneten Ersatzpfad umschalten zu können.

Gelöst wird diese Aufgabe bei einem Verfahren gemäß Oberbegriff des Patentanspruches 1 bzw. des Patentanspruches 3 durch die in diesem Patentanspruch angegebenen Verfahrensmerkmale.

Der Vorteil der Erfindung besteht dabei darin, daß mit geringem Steuerungsaufwand bei Ausfall eines aktiven Pfades auf einen diesem zugeordneten Ersatzpfad umgeschaltet werden kann. Ein weiterer Vorteil des Verfahrens gemäß Patentanspruch 1 besteht in der gesonderten Erfassung der Anzahl der über den aktiven Pfad und den Ersatzpfad zu übertragenden Nachrichtenzellen. Dadurch kann auch bereits bei einem erhöhten Nachrichtenzellenverlust auf dem aktiven Pfad ohne Vorliegen eines vollständigen Ausfalls auf den Ersatzpfad umgeschaltet werden.

Eine vorteilhafte Ausgestaltung des Verfahrens nach Patentanspruch 1 ergibt sich aus dem Patentanspruch 2. Der Vorteil dieser Ausgestaltung besteht dabei in der Übertragung von Synchronisierzellen und deren Auswertung in der am Ende des jeweiligen Pfadpaares liegenden Koppeleinrichtung, um die Anzahl der über einen aktiven Pfad und einen zugehörigen Ersatzpfad übertragenen Nachrichtenzellen in vorgegebenen Zeitabständen jeweils auf einen einheitlichen Anfangswert zu setzen. Auf diese Weise ist auch für den Fall, daß über einen aktiven Pfad und den zugehörigen Ersatzpfad Nachrichtenzellen mit unterschiedlichen Zellenverlustwahrscheinlichkeiten übertragen werden, sichergestellt, daß im Normalfall die Differenz zwischen der Anzahl der über einen aktiven Pfad und den zugehörigen Ersatzpfad übertragenen Nachrichtenzellen unterhalb eines für eine Pfadumschaltung festgelegten Schwellwertes liegt.

Eine weitere Ausgestaltung der Verfahren nach den Patentansprüchen 1 und 3 geht aus dem Patentanspruch 4 hervor. Der Vorteil dieser Ausgestaltung besteht darin, daß bei mehrstufig ausgebildeten Koppeleinrichtungen die einzelnen Nachrichtenzellen erst in derjenigen Koppelstufe für eine Übertragung über ein Pfadpaar dupliziert werden, in welcher sich die beiden unterschiedlichen Übertragungswege verzweigen. Die zusätzliche Belastung der jeweiligen Koppeleinrichtung durch die duplizierten Nachrichtenzellen bleibt damit minimal.

Die vorstehend aufgezeigte Aufgabe wird bei einer Schaltungsanordnung der eingangs genannten Art durch die im Patentanspruch 5 angegebenen schaltungstechnischen Merkmale gelöst. Der Vorteil dieser Schaltungsanordnung besteht dabei in einem relativ geringen schaltungstechnischen Aufwand, um bei einem Pfadpaar eine schnelle Umschaltung zwischen dem aktiven Pfad und dem zugehörigen Ersatzpfad durchführen zu können.

Ein besonders geringer schaltungstechnischer Aufwand ergibt sich, wenn die Zählmittel entsprechend den in den Patentansprüchen 6 und 7 aufgeführten schaltungstechnischen Maßnahmen ausgebildet sind.

Im folgenden wird die vorliegende Erfindung anhand einer Zeichnung beispielsweise näher erläutert.
Figur 1 zeigt in einem Blockschaltbild ausschnittweise ein ATM-Kommunikationsnetz, bei welchem die voliegende Erfindung angewandt ist,
Figur 2 zeigt den schematischen Aufbau von Nachrichtenzellen, die jeweils innerhalb der in Figur 1 angedeuteten Koppeleinrichtungen übertragen werden, und
Figur 3 zeigt in schematischer Form die Einbeziehung einer Mehrzahl von virtuellen Verbindungen in ein virtuelles Pfadpaar.

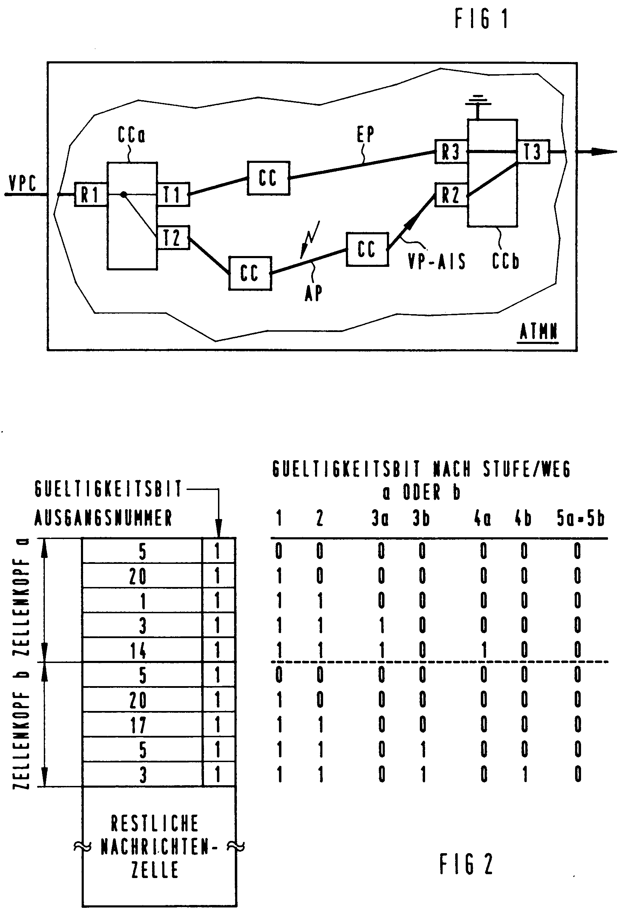

In Figur 1 ist ausschnittweise ein nach einem asynchronen Transfermodus ("Asynchronous Transfer Mode") arbeitendes ATM-Kommunikationsetz ATMN dargestellt, welches aus einer Vielzahl von Koppeleinrichtungen gebildet und beispielsweise als Zubringernetz für größere ATM-Vermittlungseinrichtungen dienen möge. Innerhalb dieses ATM-Kommunikationsnetzes werden in gleicher Richtung verlaufende, in bekannter Weise eingerichtete virtuelle Verbindungen über sogenannte virtuelle Pfade geführt, d. h. diese virtuellen Pfade führen jeweils eine Mehrzahl von virtuellen Verbindungen. Die Koppeleinrichtungen mögen dabei beispielsweise als sogenannte "Cross Connects" ausgebildet sein, über welche virtuelle Pfade fest eingerichtet werden und über längere Zeit bestehen bleiben. Da ein solcher virtueller Pfad beispielsweise bis zu 65 536 virtuelle Verbindungen enthalten und außerdem eine hohe Summenbitrate von beispielsweise bis zu 2,4 Gbit/s aufweisen kann, muß ein solcher Pfad im Fehlerfalle möglichst schnell auf einen Ersatzweg umgeschaltet werden, um einen möglichst geringen Verlust von innerhalb der einzelnen virtuellen Verbindungen übertragenen Nachrichtenzellen sicherzustellen. Dafür wird innerhalb des ATM-Kommunikationsnetzes für jeden Pfad, im folgenden als aktiver Pfad bezeichnet, ein Ersatzpfad festgelegt. Der jeweilige aktive Pfad und der zugehörige Ersatzpfad werden im folgenden als Pfadpaar bezeichnet. Der aktive Pfad und der zugehörige Ersatzpfad verlaufen dabei über getrennte Wege, um ein hohes Maß an Ausfallsicherheit zu erreichen. Beispielsweise werden also nach Möglichkeit für diese beiden Pfade nicht dieselben Glasfaserbündel innerhalb des ATM-Kommunikationsnetzes benutzt.

In Figur 1 ist stellvertretend für eine Vielzahl von innerhalb des ATM-Kommunikationsnetzes verlaufenden virtuellen Pfadpaaren ein zwischen zwei Koppeleinrichtungen eingerichtetes virtuelles Pfadpaar schematisch dargestellt. Die Koppeleinrichtungen sind dabei mit CCa und CCb bezeichnet. Die Koppeleinrichtung CCa stellt den Anfang des virtuellen Pfadpaares dar und erhält an einer Schnittstelleneinrichtung R1 die innerhalb eines Zubringerpfades VPC auftretenden Nachrichtenzellen zugeführt. Der aktive Pfad AP verläuft von der Koppeleinrichtung CCa aus über eine mit dieser verbundene Schnittstelleneinrichtung T2 sowie zwei mit CC bezeichnete Zwischenkoppeleinrichtungen zu einer mit R2 bezeichneten Schnittstelleneinrichtung der Koppeleinrichtung CCb. Der zugehörige Ersatzpfad EP ist dagegen über eine der Koppeleinrichtung CCa zugehörige Schnittstelleneinrichtung T1 und eine Zwischenkoppeleinrichtung CC zu einer Schnittstelleneinrichtung R3 der Koppeleinrichtung CCb eingerichtet. Wie im folgenden noch erläutert wird, werden die der Koppeleinrichtung CCa über die Schnittstelleneinrichtung R1 zugeführten Nachrichtenzellen jeweils dupliziert und die einander zugeordneten Nachrichtenzellen gesondert über den aktiven Pfad und den Ersatzpfad zu der Koppeleinrichtung CCb hin übertragen. In dieser werden im Normalfall die über den Ersatzpfad übertragenen Nachrichtenzellen verworfen und lediglich die über den aktiven Pfad übertragenen Nachrichtenzellen an eine einen Ausgang der Koppeleinrichtung CCb darstellende Schnittstelleneinrichtung T3 weitergeleitet. Lediglich bei Auftreten von Störungen auf dem aktiven Pfad wird auf dem zugehörigen Ersatzpfad umgeschaltet, d. h. es werden nun die über diesen Ersatzpfad eintreffenden Nachrichtenzellen an die Schnittstelleneinrichtung T3 weitergeleitet, während die ggf. noch über den aktiven Pfad eintreffenden Nachrichtenzellen unterdrückt werden.

Im folgenden wird nun zunächst anhand der Figur 2 auf die genannte Duplizierung der Nachrichtenzellen innerhalb der Koppeleinrichtung CCa eingegangen. Hierzu wird davon ausgegangen, daß die Koppeleinrichtungen des ATM-Kommunikationsnetzes und damit auch die Koppeleinrichtung CCa jeweils mehrstufig ausgebildet sind und innerhalb der jeweiligen Koppeleinrichtung die Nachrichtenzellen nach dem sog. Self-Routing-Prinzip übertragen werden. Nach diesem Prinzip wird jeder Nachrichtenzelle bei deren Eintritt in die jeweilige Koppeleinrichtung zusätzlich zu dem vorhandenen externen Zellenkopf und nach Maßgabe dieses Zellenkopfes ein interner Zellenkopf vorangestellt. Dieser weist eine der Anzahl der Koppelstufen der jeweiligen Koppeleinrichtung entsprechende Anzahl von Kopfteilen auf, durch welche jeweils der Weg durch die jeweilige Koppelstufe, d. h. beispielsweise der Ausgang der Koppelstufe, festgelegt ist. Die Reihenfolge der Kopfteile entspricht dabei der Reihenfolge, in der die Koppelstufen der jeweiligen Koppeleinrichtung, hier der Koppeleinrichtung CCa, zu durchlaufen ist.

Bei dem vorliegenden Ausführungsbeispiel ist nun vorgesehen, daß jeder der Nachrichtenzellen zwei interne Zellenköpfe vorangestellt werden, nämlich einer für den aktiven Pfad und der verbleibende Zellenkopf für den Ersatzpfad. Dabei ist jedem Kopfteil ein Gültigkeitsbit beigefügt, welches zunächst auf einen festgelegten logischen Pegel, beispielsweise auf den logischen Pegel "1", gesetzt ist.

Bei dem Durchlauf einer Nachrichtenzelle beispielsweise durch die Koppeleinrichtung CCa werden in jeder Koppelstufe die dieser zugeordneten Kopfteile der beiden internen Zellenköpfe miteinander verglichen. Bei einer Identität dieser Kopfteile wird die betreffende Nachrichtenzelle nach Maßgabe der in den identischen Kopfteilen enthaltenen Wegeinformationen, d. h. nach Maßgabe der Bezeichnung des zu benutzenden Ausgangs, zu der nachfolgenden Koppelstufe weitergeleitet. Dabei werden die Gültigkeitsbits der gerade verglichenen Kopfteile gelöscht. Bei einer Nichtidentität der miteinander verglichenen Kopfteile wird dagegen die gerade vorliegende Nachrichtenzelle dupliziert. Die daraus resultierenden beiden Nachrichtenzellen werden dann nach Maßgabe eines der beiden Kopfteile über unterschiedliche Wege innerhalb der jeweiligen Koppelstufe weitergeleitet.

In dem gerade für die Weiterleitung berücksichtigten Kopfteil sowie in den Kopfteilen des jeweils anderen internen Zellenkopfes werden dabei die Gültigkeitsbits gelöscht. Schließlich wird für den Fall, daß von den miteinander verglichenen Kopfteilen einer als ungültig markiert ist (Gülltigkeitsbit ist gelöscht), die betreffende Nachrichtenzelle lediglich nach Maßgabe der in dem gültigen Kopfteil enthaltenen Wegeinformationen weitergeleitet.

In Figur 2 ist als Beispiel der Fall dargestellt, daß einer Nachrichtenzelle zwei interne Zellenköpfe a und b vorangestellt sind, wobei jeder dieser internen Zellenköpfe 5 Kopfteile aufweist, um die Nachrichtenzelle innerhalb einer fünfstufigen Koppeleinrichtung weiterzuleiten. Die in dem jeweiligen Kopfteil angegebene Ziffer gibt dabei den bei der jeweiligen Koppelstufe zu benutzenden Ausgang an. Darüber hinaus ist jedem Kopfteil ein Gültigkeitsbit beigefügt, das zunächst auf den logischen Pegel "1" gesetzt ist. Wie sich aus dem dargestellten Beispiel ergibt, sind die in den ersten beiden Kopfteilen der internen Zellenköpfe enthaltenen Wegeinformationen identisch (5, 20). Damit wird die betreffende Nachrichtenzelle über den Ausgang 5 der ersten Koppelstufe und den Ausgang 20 der zweiten Koppelstufe zu der dritten Koppelstufe hin übertragen. Dabei werden die Gültigkeitsbits dieser Kopfteile gelöscht. Die der dritten Koppelstufe zugeordneten Kopfteile weichen voneinander ab, so daß in dieser dritten Koppelstufe die Nachrichtenzelle dupliziert wird. Die daraus resultierenden beiden Nachrichtenzellen werden anschließend über die Ausgänge 1 und 17 der dritten Koppelstufe weitergeleitet. Dabei wird bei der über den Weg a (aktiver Pfad) weitergeleiteten Nachrichtenzelle in dem der dritten Koppelstufe zugeordneten Kopfteil des internen Zellenkopfes a sowie in sämtlichen Kopfteilen des internen Zellenkopfes b jeweils das Gültigkeitsbit gelöscht. In entsprechender Weise wird bei der über den Weg b (Ersatzweg) übertragenen Nachrichtenzelle in dem der dritten Koppelstufe zugeordneten Kopfteil sowie in sämtlichen Kopfteilen des internen Zellenkopfes a jeweils das Gültigkeitsbit gelöscht. Daraufhin werden in den verbleibenden Koppelstufen 4 und 5 die beiden aus der Duplizierung hervorgegangenen Nachrichtenzellen lediglich noch nach Maßgabe des für den jeweiligen Weg vorgesehenen internen Zellenkopfes weitergeleitet. In Figur 2 sind in der rechts neben der Nachrichtenzelle dargestellten Tabelle die Zustände der Gültigkeitsbits für die einzelnen Kopfteile nach den Stufen 1 bis 5 für die beiden Wege a und b nochmals dargestellt.

Die vorstehend erläuterten Steuerungsvorgänge wiederholen sich auch in den in Figur 1 dargestellten Zwischenkoppeleinrichtungen CC und in der Koppeleinrichtung CCb. Da bei dem angenommenen Beispiel in diesen Koppeleinrichtungen keine Duplizierung von Nachrichtenzellen erfolgt, erhält jede eintreffende Nadchrichtenzelle zwei identische interne Zellenköpfe vorangestellt. Die Weiterleitung der Nachrichtenzellen innerhalb der jeweiligen Koppeleinrichtung erfolgt dann nach Maßgabe der in den internen Zellenköpfen enthaltenen identischen Kopfteile.

Die vorstehend erläuterte Vorgehensweise zur Übertragung von Nachrichtenzellen über getrennte Wege, d. h. über einen aktiven Pfad und über einen Ersatzpfad, bringt den Vorteil mit sich, daß die einzelnen Nachrichtenzellen erst in derjenigen Koppelstufe einer Koppeleinrichtung dupliziert werden, wo sich tatsachlich die beiden Wege verzweigen. Die Belastung der jeweiligen Koppeleinrichtung durch die Duplizierung der Nachrichtenzellen bleibt damit minimal.

Im übrigen sei noch angemerkt, daß das vorstehend erläuterte Duplizieren von Nachrichtenzellen in einer Koppelstufe besonders dann einfach zu realisieren ist, wenn innerhalb der einzelnen Koppelelemente dieser Koppelstufe ein Zentralspeicher ("shared memory") sowie diesen zugeordnete Ausgangswarteschlangen vorgesehen sind. In diesem Falle wird die jeweilige Nachrichtenzelle nur einmal in dem Zentralspeicher abgelegt und zweimal ausgelesen, und zwar jeweils dann, wenn diese Nachrichtenzelle in der jeweiligen Ausgangswarteschlange als nächste für eine Übertragung ansteht.

Im folgenden wird nun auf den Fall eingegangen, daß bei der zuvor erläuterten Übertragung von Nachrichtenzellen über den aktiven Pfad des in Figur 1 dargestellten Pfadpaares eine Störung auftritt, woraufhin die über diesen aktiven Pfad übertragenen Nachrichtenzellen durch die Koppeleinrichtung CCb zu verwerfen und stattdessen die über den Ersatzpfad zugeführten Nachrichtenzellen über die Schnittstelleneinrichtung T3 weiterzuleiten sind. Dafür ist gemäß einem ersten Ausführungsbeispiel zunächst vorgesehen, daß die in dem aktiven Pfad liegende Schnittstelleneinrichtung R2 auf Durchlaß gesteuert ist, während die über die im Ersatzpfad liegende Schnittstelleneinrichtung R3 eintreffenden Nachrichtenzellen verworfen werden. Bei einer Unterbrechung des aktiven Pfades, welche in Figur 1 mit einem "Blitz" symbolisiert ist, fügt die auf diese Unterbrechung nachfolgende Zwischenkoppeleinrichtung CC in den Nachrichtenzellenstrom eine Signalisierungszelle ein, die zu der Koppeleinrichtung CCb übertragen und dort erkannt wird. Als Signalisierungszelle kann dabei beisplielsweise eine Alarmzelle "VP-AIS" benutzt werden, wie sie gemäß der CCITT-Empfehlung I.610 festgelegt ist. Auf das Auftreten einer solchen Signalisierungszelle wird durch die Koppeleinrichtung CCb die im aktiven Pfad liegende Schnittstelleneinrichtung R2 gesperrt und mit Hilfe eines zu der Schnittstelleneinrichtung R3 hin übertragenen Steuersignals der Ersatzpfad über diese Schnittstelleneinrichtung durchgeschaltet.

Bei einem weiteren Ausführungsbeispiel werden der aktive Pfad und der Ersatzpfad des in Figur 1 dargestellten Pfadpaares aktiv bis zu der Schnittstelleneinrichtung T3 der Koppeleinrichtung CCb geführt, d. h. die über den Ersatzpfad zu übertragenden Nachrichtenzellen werden erst an dieser Stelle im Normalfalle verworfen. Zusätzlich wird an dieser Schnittstelleneinrichtung kontinuierlich die Anzahl der über den aktiven Pfad und über den Ersatzpfad eintreffenden Nachrichtenzellen gesondert erfaßt. Aufgrund von Laufzeitunterschieden und den bei dem asynchronen Transfermodus unvermeidlichen Laufzeitschwankungen wird im allgemeinen eine Differenz bei den erfaßten Werten auftreten, die aber im Normalfall nicht beliebig hohe Werte annimmt. Tritt jedoch auf dem aktiven Pfad eine Störung beispielsweise in Form einer Unterbrechung auf, so nimmt die Anzahl der für den Ersatzpfad ermittelten Nachrichtenzellen gegenüber der für den aktiven Pfad ermittelten Anzahl von Nachrichtenzellen erheblich zu. Überschreitet dabei die Differenz dieser beiden Werte einen festgelegten Schwellwert, so werden die über den aktiven Pfad ggf. noch eintreffenden Nachrichtenzellen durch die Schnittstelleneinrichtung T3 verworfen, während die über den Ersatzpfad eintreffenden Nachrichtenzellen weitergeleitet werden. Durch diese Vorgehensweise erfolgt die Umschaltung wesentlich schneller als die zuvor erwähnte Umschaltung mit Hilfe der Schnittstelleneinrichtungen R2 und R3.

Für die gerade erläuterte Erfassung der über den aktiven Pfad und den Ersatzpfad übertragenen Nachrichtenzellen sind in der Schnittstelleneinrichtung T3 Zählmittel vorgesehen. Diese können aus einem dem aktiven Pfad zugeordneten Zähler sowie einem dem Ersatzpfad zugeordneten Zähler gebildet sein, deren momentane Zählerstände einer Einrichtung zur Differenzbildung der momentanen Zählerstände zugeführt sind. Nach Maßgabe der von dieser Einrichtung abgegebenen Ausgangssignalen, die von der jeweiligen Differenz abhängig sind, erfolgt dann eine Durchschaltung der über den aktiven Pfad bzw. Ersatzpfad übertragenen Nachrichtenzellen. Alternativ dazu können die Zählmittel auch aus einem Vor-/Rückwärtszähler gebildet sein, dessen momentaner Zählerstand mit jedem Auftreten einer über den aktiven Pfad übertragenen Nachrichtenzelle in der einen Richtung, mit dem Auftreten einer über den Ersatzpfad übertragenen Nachrichtenzelle dagegen in der anderen Richtung veränderbar ist. In diesem Falle erfolgt die Weiterleitung der über den aktiven Pfad bzw. Ersatzpfad eintreffenden Nachrichtenzellen nach Maßgabe des momentanen Zählerstandes dieses Vor-/Rückwärtszählers.

Unabhängig von der Realisierung der genannten Zählmittel können sich für den Fall, daß über den aktiven Pfad und den Ersatzpfad Nachrichtenzellen mit unterschiedlichen Zellenverlustwahrscheinlichkeiten übertragen werden, ohne geeignete Steuermaßnahmen nach einer längeren Zeitspanne Zählerstands-Differenzen bzw. momentane Zählerstände einstellen, durch welche die zuvor beschriebenen Überwachungsmechanismen fälschlicherweise ansprechen. Um dies auszuschließen, werden bei dem vorliegenden Ausführungsbeispiel von der Koppeleinrichtung CCa in festgelegten Zeitabständen Synchronisierzellen in die über den aktiven Pfad und den Ersatzpfad übertragenen Nachrichtenzellenströme eingefügt. Mit dem Auftreten dieser Synchronisierzellen in der Koppeleinrichtung CCb wird dann der momentane Zählerstand der zuvor genannten Zählmittel auf einen festgelegten Anfangswert gesetzt.

Für die Dimensionierung der Zählmittel sowie die Festlegung der für die Übertragung der Synchronisierzellen vorgesehenen Zeitintervalle soll nachfolgende Abschätzung dienen. Die Laufzeitdifferenz für die innerhalb des ATM-Kommunikationsnetzes zu übertragenden Nachrichtenzellen ist im wesentlichen durch die Unterschiede in den geometrischen Weglängen gegeben. Eine Weglänge von 1000 km ist hier sicher ein maximaler Wert, wenn man von Satellitenverbindungen absieht. 1000 km entsprechen dabei einer Laufzeit von 4 ms. Für die maximale Laufzeitvariation bei Durchlauf durch eine Koppeleinrichtung werden derzeit Werte von ca. 300 µs vorgeschlagen. Nun könnte im Extremfall der Ersatzpfad über 10 Koppeleinrichtungen und eine Weglänge von 1000 km verlaufen, während der aktive Pfad über eine einzige Koppeleinrichtung verläuft, wenig belastet ist und nahezu keine Verzögerung hervorruft. Die maximale Laufzeitdifferenz beträgt 7 ms, was etwa 2500 Zellenzyklen entspricht. Handelt es sich nun z. B. um eine virtuelle Verbindung mit einer Bitrate von 2 Mbit/s, bei der im Mittel ca. alle 60 Zellentakte eine Nachrichtenzelle gesendet wird, so folgt daraus, daß der Unterschied der zuvor genannten Zählerstände für die beiden Pfade, d. h. für die den aktiven Pfad und den Ersatzpfad, höchstens ca. 42 betragen kann. In diesem Falle könnte also als Schwellwert für den zuvor erwähnten Umschaltmechanismus ein Wert oberhalb von 42 festgelegt werden.

Wenn als Zellenverlustwahrscheinlichkeit ein Wert von 10⁻⁵ angenommen wird, so ist dies sicher ein relativ hoher Wert. Bei diesem geht im Mittel nach jeweils 100 000 Nachrichtenzellen eine verloren, was einem Zeitinvervall von 0,28 s entspricht. Es genügt also im Abstand von einigen Sekunden jeweils eine Synchronisierzelle in die Nachrichtenströme einzufügen. Als Synchronisierzellen könnten dabei beispielsweise auch die bereits in der CCITT-Empfehlung I.610 definierten "Performance Monitoring"-Zellen verwendet werden.

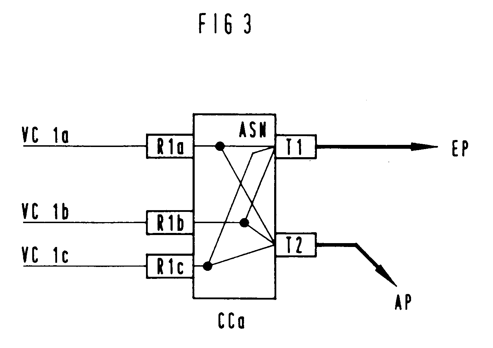

Die zuvor beschriebenen Verfahren sind auch dann anwendbar, wenn das in Figur 1 dargestellte Pfadpaar beispielsweise in der Koppeleinrichtung CCa gebildet bzw. in der Koppeleinrichtung CCb wieder aufgelöst wird. Für die Koppeleinrichtung CCa ist dafür in Figur 3 ein Beispiel angegeben. Wie daraus hervorgeht, ist das redundante Pfadpaar (aktiver Pfad AP und Ersatzpfad EP) aus drei virtuellen Verbindungen VC1a, VC1b und VC1c gebildet. Im Zuge dieser virtuellen Verbindungen auftretende Nachrichtenzellen sind dabei der Koppeleinrichtung CCa über Schnittstelleneinrichtungen R1a, R1b und R1c zugeführt. Diese Nachrichtenzellen werden in der Koppeleinrichtung CCa nach dem oben beschriebenen Prinzip dupliziert. In der Koppeleinrichtung CCb wird dann die Redundanz in den in Figur 1 dargestellten Schnittstelleneinrichtungen R2 und R3 oder an drei Schnittstellenausgängen T3a, T3b und T3c wieder aufgehoben. Dabei sind in diesen Schnittstelleneinrichtungen für die jeweilige virtuelle Verbindung individuell die oben erwähnten Zählmittel vorzusehen. Darüber hinaus sind die oben erwähnten Synchronisierzellen für jede der virtuellen Verbindungen gesondert zu übertragen.

Abschließend sei noch darauf hingewiesen, daß in dem in Figur 1 dargestellten ATM-Kommunikationsnetz als Koppeleinrichtungen anstelle von "Cross Connects" auch Vermittlungseinrichtungen vorgesehen sein können, über welche die zu einem virtuellen Pfadpaar gehörenden virtuellen Verbindungen im Zuge eines Verbindungsaufbaues erst eingerichtet werden.

## Patentansprüche

1. Verfahren zum Übertragen von Nachrichtenzellen über jeweils aus einem aktiven Pfad (AP) und einem Ersatzpfad (EP) gebildete redundante virtuelle Pfadpaare eines nach einem asynchronen Transfermodus arbeitenden, eine Mehrzahl von Koppeleinrichtungen (CCa, CC, CCb) aufweisenden ATM-Kommunikationsnetzes (ATMN), wobei die über ein solches virtuelles Pfadpaar zu übertragenden Nachrichtenzellen durch eine am Anfang des jeweiligen Pfadpaares liegende Koppeleinrichtung (CCa) dupliziert und die einander zugeordneten Nachrichtenzellen gesondert über den zugehörigen aktiven Pfad und Ersatzpfad übertragen werden und wobei durch eine am Ende des jeweiligen virtuellen Pfadpaares liegende Koppeleinrichtung (CCb) im Normalfall lediglich die über den zugehörigen aktiven Pfad übertragenen Nachrichtenzellen weitergeleitet, die über den zugehörigen Ersatzpfad übertragenen Nachrichtenzellen dagegen verworfen werden,
**dadurch gekennzeichnet**,
daß die über den aktiven Pfad (AP) und den Ersatzpfad (EP) des jeweiligen Pfadpaares übertragenen Nachrichtenzellen bis zu dem für das jeweilige Pfadpaar in Frage kommenden Ausgang der am Ende des jeweiligen Pfadpaares liegenden Koppeleinrichtung (CCb) weitergeleitet werden, daß an dem betreffenden Ausgang kontinuierlich die Anzahl der über den aktiven Pfad und über den Ersatzpfad eintreffenden Nachrichtenzellen gesondert erfaßt wird und daß bei Vorliegen einer Anzahl von über den Ersatzpfad eintreffenden Nachrichtenzellen, die um einen festgelegten Wert oberhalb der Anzahl der über den aktiven Pfad eintreffenden Nachrichtenzellen liegt, die über den Ersatzpfad eintreffenden Nachrichtenzellen weitergeleitet, die über die aktiven Pfad eintreffenden Nachrichtenzellen dagegen verworfen werden.

2. Verfahren nach Anspruch 1,
**dadurch gekennzeichnet**,
daß von der am Anfang des jeweiligen virtuellen Pfadpaares liegenden Koppeleinrichtung (CCa) in vorgegebenen Zeitabständen Synchronisierzellen zwischen die über den zugehörigen aktiven Pfad (AP) und Ersatzpfad (EP) übertragenen Nachrichtenzellen eingefügt werden und daß durch das Auftreten der Synchronisierzellen in der am Ende des jeweiligen Pfadpaares liegenden Koppeleinrichtung (CCb) die Anzahl der über den aktiven Pfad und den Ersatzpfad übertragenen Nachrichtenzellen jeweils auf einen einheitlichen Anfangswert gesetzt wird.

3. Verfahren zum Übertragen von Nachrichtenzellen über jeweils aus einem aktiven Pfad (AP) und einem Ersatzpfad (EP) gebildete redundante virtuelle Pfadpaare eines nach einem asynchronen Transfermodus arbeitenden, eine Mehrzahl von Koppeleinrichtungen (CCa, CC, CCb) aufweisenden ATM-Kommunikationsnetzes (ATMN), wobei die über ein solches virtuelles Pfadpaar zu übertragenden Nachrichtenzellen durch eine am Anfang des jeweiligen Pfadpaares liegende Koppeleinrichtung (CCa) dupliziert und die einander zugeordneten Nachrichtenzellen gesondert über den zugehörigen aktiven Pfad und Ersatzpfad übertragen werden und wobei durch eine am Ende des jeweiligen virtuellen Pfadpaares liegende Koppeleinrichtung (CCb) im Normalfall lediglich die über den zugehörigen aktiven Pfad übertragenen Nachrichtenzellen weitergeleitet, die über den zugehörigen Ersatzpfad übertragenen Nachrichtenzellen dagegen verworfen werden,
**dadurch gekennzeichnet**,
daß die über den Ersatzpfad (EP) des jeweiligen Pfadpaares übertragenen Nachrichtenzellen an einem diesem Ersatzpfad zugehörigen Eingang der am Ende des jeweiligen Pfadpaares liegenden Koppeleinrichtung (CCb) zunächst verworfen, die über den aktiven Pfad übertragenen Nachrichtenzellen dagegen über einen diesem aktiven Pfad zugehörigen Eingang der Koppeleinrichtung weitergeleitet werden,
daß bei einer Unterbrechung des aktiven Pfades des jeweiligen Pfadpaares von der nach der Unterbrechung liegenden Koppeleinrichtung (CC) aus ein Unterbrechungssignal in Richtung der am Ende des jeweiligen Pfadpaares liegenden Koppeleinrichtung (CCb) übertragen wird
und daß auf das Auftreten eines solchen Unterbrechungssignals in der am Ende des jeweiligen Pfadpaares liegenden Koppeleinrichtung der dem Ersatzpfad zugehörige Eingang bzw. der dem aktiven Pfad zugehörige Eingang durch ein internes Steuersignal derart gesteuert wird,
daß im folgenden die über den Ersatzpfad übertragenen Nachrichtenzellen weitergeleitet, die über den aktiven Pfad übertragenen Nachrichtenzellen dagegen verworfen werden.

4. Verfahren nach einem der Ansprüche 1 bis 3,
**dadurch gekennzeichnet**,
daß in einem ATM-Kommunikationsnetz (ATMN) mit mehrstufig ausgebildeten Koppeleinrichtungen jeder der von der jeweiligen Koppeleinrichtung (CCa, CC, CCb) aufgenommenen Nachrichtenzellen nach Maßgabe des diesen jeweils zugehörigen Zellenkopfes ein gesonderter interner Zellenkopf für den aktiven Pfad und den Ersatzpfad vorangestellt wird, in welchem in der Reihenfolge der innerhalb der jeweiligen Koppeleinrichtung zu durchlaufenden Koppelstufen eine der Anzahl der Koppelstufen entsprechende Anzahl von Kopfteilen enthalten ist, durch welche jeweils der Weg durch die jeweilige Koppelstufe festgelegt ist,
daß von jeder der Koppelstufen der jeweiligen Koppeleinrichtung bei Auftreten einer Nachrichtenzelle die für die jeweilige Koppelstufe maßgebenden, einander zugeordneten Koppelteile der internen Zellenköpfe miteinander verglichen werden,
daß bei einer Indentität der miteinander verglichenen Kopfteile die betreffende Nachrichtenzelle nach Maßgabe der identischen Kopfteile weitergeleitet wird,
daß bei einer Nichtidentität der miteinander verglichenen Kopfteile dagegen die betreffende Nachrichtenzelle dupliziert wird, die daraus resultierenden beiden Nachrichtenzellen gesondert nach Maßgabe eines der miteinander verglichenen Kopfteile weitergeleitet werden und mit diesem individuellen Weiterleiten die dem jeweiligen Kopfteil nachfolgenden, demselben internen Zellenkopf zugehörigen Kopfteile unverändert beibehalten, die Kopfteile des anderen internen Zellenkopfes dagegen als ungültig markiert werden
und daß für den Fall, daß von den miteinander verglichenen Kopfteilen einer als ungütltig markiert ist, die betreffende Nachrichtenzelle lediglich nach Maßgabe des verbleibenden gültigen Kopfteiles weitergeleitet wird.

5. Schaltungsanordnung zum Übertragen von Nachrichtenzellen über jeweils aus einem aktiven Pfad (AP) und einem Ersatzpfad (EP) gebildete redundante virtuelle Pfadpaare eines nach einem asynchronen Transfermodus arbeitenden, eine Mehrzahl von Koppeleinrichtungen (CCa, CC, CCb) aufweisenden ATM-Kommunikationsnetzes (ATMN), wobei die über ein solches virtuelles Pfadpaar zu übertragenden Nachrichtenzellen durch eine am Anfang des jeweiligen Pfadpaares liegende Koppeleinrichtung (CCa) dupliziert und die einander zugeordneten Nachrichtenzellen gesondert über den zugehörigen aktiven Pfad und Ersatzpfad übertragen werden und wobei durch eine am Ende des jeweiligen virtuellen Pfadpaares liegende Koppeleinrichtung (CCb) im Normalfall lediglich die über den zugehörigen aktiven Pfad übertragenen Nachrichtenzellen weitergeleitet, die über den zugehörigen Ersatzpfad übertragenen Nachrichtenzellen dagegen verworfen werden, zur Durchführung des Verfahrens nach Anspruch 1,
**dadurch gekennzeichnet**,
daß die über den aktiven Pfad (AP) und den Ersatzpfad (EP) des jeweiligen Pfadpaares übertragenen Nachrichtenzellen bis zu dem für das jeweilige Pfadpaar in Frage kommenden Ausgang der am Ende des jeweiligen Pfadpaares liegenden Koppeleinrichtung (CCb) weitergeleitet sind, daß an dem betreffenden Ausgang Zählmittel vorgesehen sind, welche kontinuierlich die Anzahl der über den aktiven Pfad und den Ersatzpfad eintreffenden Nachrichtenzellen gesondert erfassen,
und daß Steuermittel vorgesehen sind, welche bei Vorliegen einer Anzahl von über den Ersatzpfad eintreffenden Nachrichtenzellen, die um einen festgelegten Wert oberhalb der Anzahl der über den aktiven Pfad eintreffenden Nachrichtenzellen liegt, den betreffenden Ausgang derart steuern, daß die über den Ersatzpfad eintreffenden Nachrichtenzellen weitergeleitet, die über den aktiven Pfad eintreffenden Nachrichtenzellen dagegen verworfen werden.

6. Schaltungsanordnung nach Anspruch 5,
**dadurch gekennzeichnet**,
daß die Zählmittel aus einem dem aktiven Pfad (AP) zugeordneten Zähler sowie einem dem Ersatzpfad (EP) zugeordneten Zähler gebildet sind, deren momentane Zählerstände einer Einrichtung zur Differenzbildung der momentanen Zählerstände zugeführt sind.

7. Schaltungsanordnung nach Anspruch 5,
**dadurch gekennzeichnet**,
daß die Zählmittel aus einem Vor-/Rückwärtszähler gebildet sind, dessen momentaner Zählerstand mit jedem Auftreten einer über den aktiven Pfad übertragenen Nachrichtenzelle in der einen Richtung, mit jedem Auftreten einer über den Ersatzpfad übertragenen Nachrichtenzelle dagegen in der anderen Richtung veränderbar ist.
